# FASCICULE DE BREVET EUROPEEN

(11) **EP 1 885 557 B1**
(45) Date de publication et mention de la délivrance du brevet: **11.01.2017**
(21) Numéro de dépôt: 06778585.7
(22) Date de dépôt: 02.06.2006
(51) Int. Cl.: B32B 27/28, C08F 259/08, F16L 9/12, F16L 9/133

(54) **TUBE MULTICOUCHE POUR LE TRANSPORT D'EAU OU DE GAZ**
MEHRSCHICHTRÖHRE ZUM TRANSPORT VON WASSER ODER GAS
MULTILAYER TUBE FOR TRANSPORTING WATER OR GAS

(30) Priorité: 02.06.2005 FR 0505603; 17.06.2005 FR 0506189; 17.10.2005 US 716429 P
(43) Date de publication de la demande: 13.02.2008
(73) Titulaire: ARKEMA FRANCE, 92700 Colombes (FR)
(72) Inventeur: BONNET, Anthony, F-27170 - Beaumont Le Roger (FR); WERTH, Michael, F-27300 Bernay (FR)
(74) Mandataire: Lhoste, Catherine
(86) Numéro de dépôt international: PCT/FR2006/001292
(87) Numéro de publication internationale: WO 2006/129029

(56) Documents cités:
- EP-A- 0 551 094
- EP-A- 0 673 762
- WO-A-00/77432
- WO-A2-00/59706
- FR-A- 2 794 516
- FR-A1- 2 794 837
- US-A- 3 932 692
- US-A- 5 132 164
- US-A- 5 851 611
- US-A- 5 939 492

## Description

### [Domaine de l'invention]

La présente invention concerne un tube multicouche comprenant une couche d'un polymère fluoré sur lequel a été greffé par irradiation un monomère insaturé et une couche d'une polyoléfine. La polyoléfine peut être un polyéthylène, notamment du polyéthylène haute densité (PEHD) ou un polyéthylène réticulé (noté PEX). Le tube peut être utilisé pour le transport de liquides, en particulier de l'eau chaude, ou de gaz. L'invention est aussi relative aux utilisations de ce tube.

### [Problème technique]

Les tubes en acier ou en fonte sont de plus en plus remplacés par des équivalents en matière plastique. Les polyoléfines, notamment les polyéthylènes, sont des thermoplastiques très utilisés car ils présentent de bonnes propriétés mécaniques, ils se transforment et permettent de souder les tubes entre eux facilement. Les polyoléfines sont largement utilisées pour la fabrication de tubes pour le transport de l'eau ou du gaz de ville. Quand le gaz est sous une pression élevée (> 10 bar, voire plus), il est nécessaire que la polyoléfine soit résistante mécaniquement aux contraintes exercées par le gaz sous pression.

De plus, la polyoléfine peut être soumise à un milieu chimique agressif. Par exemple, dans le cas du transport de l'eau, celle-ci peut contenir des additifs ou des produits chimiques agressifs (par exemple de l'ozone, des dérivés chlorés utilisés pour la purification de l'eau comme l'eau de javel qui sont oxydants, surtout à chaud). Ces additifs ou produits chimiques peuvent endommager la polyoléfine au cours du temps, surtout lorsque l'eau transportée est à une température élevée (c'est le cas dans les circuits de chauffage ou bien dans les réseaux d'eau pour lesquels l'eau est portée à une température élevée pour éliminer les germes, bactéries ou microorganismes). Un problème qu'entend résoudre l'invention est donc de mettre au point un tube résistant chimiquement.

Un autre problème qu'entend résoudre l'invention est que le tube ait des propriétés barrière. On entend par barrière le fait que le tube freine la migration vers le fluide transporté de contaminants présents dans le milieu extérieur ou bien de contaminants (tels que des antioxydants ou des résidus de polymérisation) présents dans la polyoléfine. On entend par barrière aussi le fait que le tube freine la migration de l'oxygène ou des additifs présents dans le fluide transporté vers la couche de polyoléfine.

Il est également nécessaire que le tube présente de bonnes propriétés mécaniques en particulier une bonne résistance à l'impact et que les couches adhèrent bien entre elles (pas de délamination).

La Demanderesse a mis au point un tube multicouche qui répond aux problèmes posés. Ce tube présente notamment une bonne résistance chimique vis-à-vis du fluide transporté ainsi que les propriétés barrière mentionnées plus haut.

### [Art antérieur]

Le document EP 1484346 publié le 08 décembre 2004 décrit des structures multicouches comprenant un polymère fluoré greffé par irradiation. Les structures peuvent se présenter sous la forme de bouteilles, réservoirs, conteneurs ou tuyaux. La structure du tube multicouche selon l'invention n'apparaît pas dans ce document.

Le document EP 1541343 publié le 08 juin 2005 décrit une structure multicouche à base d'un polymère fluoré modifié par greffage par irradiation pour stocker ou transporter des produits chimiques. On entend dans cette demande par produit chimique des produits qui sont corrosifs ou dangereux, ou bien des produits dont on veut maintenir la pureté. La structure du tube multicouche selon l'invention n'apparaît pas dans ce document.

Le document US 6016849 publié le 25 juillet 1996 décrit un tube plastique présentant une adhérence entre la couche interne et la couche protectrice externe entre 0,2 et 0,5 N/mm. Il n'est pas fait mention de polymère fluoré modifié par greffage par irradiation.

Les documents US 2004/0206413 et WO 2005/070671 décrivent un tube multicouche comprenant une gaine de métal. Il n'est pas fait mention de polymère fluoré modifié par greffage par irradiation.

### [Brève description de l'invention]

L'invention est relative à un tube multicouche tel que défini à la revendication 1. Elle est aussi relative à l'utilisation du tube dans le transport de l'eau ou d'un gaz.

Dans le cas où le tube contient une couche de type PEX-C, l'invention dévoile un procédé permettant d'obtenir ledit tube.

L'invention pourra être mieux comprise à la lecture de la description détaillée qui va suivre, des exemples de mise en oeuvre non limitatifs de celle-ci, et à l'examen de la figure annexée. Les demandes françaises antérieures FR 05.05603 et FR 05.06189 ainsi que la demande provisional US 60/716429 ont la priorité est revendiquée son incorporées par référence.

### Figure

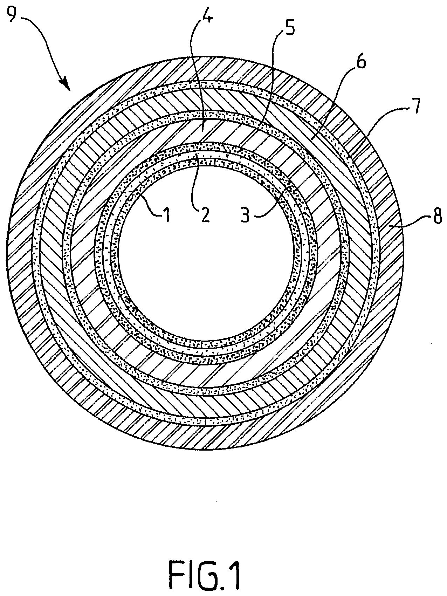

La figure 1 représente une vue en coupe d'un tube multicouche 9 selon l'une des formes de l'invention. Il s'agit d'un tube cylindrique ayant plusieurs couches concentriques, référencées de **1** à **8.**
couche **1 :** couche C₁ de polymère fluoré ;
couche **2 :** couche C₂ de polymère fluoré modifié par greffage par irradiation ;
couche **3 :** couche C₃ de liant d'adhésion ;
couche **4 :** couche C₄ de polyoléfine ;
couche **5 :** couche de liant d'adhésion ;
couche **6** : couche barrière C₅ ;
couche **7 :** couche de liant d'adhésion;
couche **8 :** couche C₆ d'une polyoléfine.

Les couches sont disposées les unes contre les autres dans l'ordre indiqué 1→8.

### [Description détaillée de l'invention]

**S'agissant du polymère fluoré greffé par irradiation,** celui-ci est obtenu par un procédé de greffage par irradiation d'un monomère insaturé sur un polymère fluoré (lequel est décrit plus loin). On parlera pour simplifier dans la suite de la demande de polymère fluoré greffé par irradiation.

Le polymère fluoré est au préalable mélangé au monomère insaturé par toutes les techniques de mélange en milieu fondu connues de l'art antérieur. L'étape de mélange s'effectue dans tout dispositif de mélange tel que des extrudeuses ou des malaxeurs utilisés dans l'industrie des thermoplastiques. De préférence, on utilisera une extrudeuse pour mettre le mélange sous forme de granulés. Le greffage a donc lieu sur un mélange (dans la masse) et non à la surface d'une poudre comme cela est par exemple décrit dans le document US 5576106**.**

Puis, le mélange du polymère fluoré et du monomère insaturé est irradié (irradiation béta β ou gamma γ) à l'état solide à l'aide d'une source électronique ou photonique sous une dose d'irradiation comprise entre 10 et 200 kGray, de préférence entre 10 et 150 kGray. Avantageusement la dose est comprise entre 2 et 6 Mrad et de préférence entre 3 et 5 Mrad. L'irradiation grâce à une bombe au cobalt 60 est particulièrement préférée. Le mélange peut par exemple être conditionné en sacs de polyéthylène, puis l'air est chassé, les sacs sont fermés et l'ensemble est irradié.

La teneur en monomère insaturé qui est greffé est comprise, en poids, entre 0,1 à 5% (c'est-à-dire que le monomère insaturé greffé correspond à 0,1 à 5 parts pour 99,9 à 95 parts de polymère fluoré), avantageusement de 0,5 à 5%, de préférence de 0,9 à 5%. La teneur en monomère insaturé greffé dépend de la teneur initiale du monomère insaturé dans le mélange polymère fluoré/monomère insaturé à irradier. Elle dépend aussi de l'efficacité du greffage, donc en particulier de la durée et de l'énergie de l'irradiation.

Le monomère insaturé qui n'a pas été greffé ainsi que les résidus libérés par le greffage notamment le HF peuvent ensuite être éventuellement éliminés. Cette dernière étape peut être rendue nécessaire si le monomère insaturé non-greffé est susceptible de nuire à l'adhésion ou bien pour des problèmes de toxicologie. Cette opération peut être réalisée selon les techniques connues de l'homme de l'art. Un dégazage sous vide peut être appliqué, éventuellement en appliquant en même temps un chauffage. Il est également possible de dissoudre le polymère fluoré greffé par irradiation dans un solvant adéquat tel que par exemple la N-méthyl pyrrolidone, puis de précipiter le polymère dans un non-solvant, par exemple dans l'eau ou bien dans un alcool, ou bien de laver le polymère fluoré greffé par irradiation à l'aide d'un solvant inerte vis-à-vis du polymère fluoré et des fonctions greffées. Par exemple, quand on greffe de l'anhydride maléique, on peut laver avec du chlorobenzène.

C'est là l'un des avantages de ce procédé de greffage par irradiation que de pouvoir obtenir des teneurs en monomère insaturé greffé plus élevées qu'avec les procédés de greffage classiques utilisant un amorceur radicalaire. Ainsi, typiquement, avec ce procédé de greffage, il est possible d'obtenir des teneurs supérieures à 1% (1 part de monomère insaturé pour 99 parts du polymère fluoré), voire même supérieure à 1,5%, ce qui n'est pas possible avec un procédé de greffage classique en extrudeuse

D'autre part, le greffage par irradiation a lieu à « froid », typiquement à des températures inférieures à 100°C, voire 50°C, de sorte que le mélange du polymère fluoré et du monomère insaturé n'est pas à l'état fondu comme pour un procédé de greffage classique en extrudeuse. Une différence essentielle est donc que, dans le cas d'un polymère fluoré semi-cristallin (comme c'est le cas avec le PVDF par exemple), le greffage a lieu dans la phase amorphe et non dans la phase cristalline alors qu'il se produit un greffage homogène dans le cas d'un greffage en extrudeuse à l'état fondu. Le monomère insaturé ne se répartit donc pas identiquement sur les chaînes du polymère fluoré dans le cas du greffage par irradiation et dans le cas du greffage en extrudeuse. Le produit fluoré modifié présente donc une répartition différente du monomère insaturé sur les chaînes de polymère fluoré par rapport à un produit qui serait obtenu par un greffage en extrudeuse.

Durant l'étape de greffage, il est préférable d'éviter la présence d'oxygène. Un balayage à l'azote ou à l'argon du mélange polymère fluoré / monomère insaturé est donc possible pour éliminer l'oxygène.

Le polymère fluoré modifié par greffage par irradiation présente la très bonne résistance chimique et à l'oxydation, ainsi que la bonne tenue thermomécanique, du polymère fluoré avant sa modification.

**S'agissant du polymère fluoré,** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère, on peut citer le fluorure de vinyle; le fluorure de vinylidène (VDF, CH₂=CF₂); le trifluoroéthylène (VF₃); le chlorotrifluoroéthylène (CTFE); le 1,2-difluoroéthylène; le tétrafluoroéthylène (TFE); l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro(1,3-dioxole); le perfluoro(2,2-diméthyl-1,3-dioxole) (PDD); le produit de formule CF₂=CFOCF₂CF(CF₃)OCF₂CF₂X dans laquelle X est SO₂F, CO₂H, CH₂OH, CH₂OCN ou CH₂OPO₃H; le produit de formule CF₂=CFOCF₂CF₂SO₂F; le produit de formule F(CF₂)ₙCH₂OCF=CF₂ dans laquelle n est 1, 2, 3, 4 or 5; le produit de formule R₁CH₂OCF=CF₂ dans laquelle R₁ est l'hydrogène où F(CF₂)z et z vaut 1, 2, 3 ou 4; le produit de formule R₃OCF=CH₂ dans laquelle R₃ est F(CF₂)_{z}- et z est 1, 2, 3 or 4; le perfluorobutyl éthylène (PFBE); le 3,3,3-trifluoropropène et le 2-trifluorométhyl-3,3,3 -trifluoro-1-propène.

Le polymère fluoré peut être un homopolymère ou un copolymère, il peut aussi comprendre des monomères non fluorés tels que l'éthylène ou le propylène.

A titre d'exemple, le polymère fluoré est choisi parmi :
- les homo- et copolymères du fluorure de vinylidène (VDF, CH₂=CF₂) contenant au moins 50% en poids de VDF. Le comonomère du VDF peut être choisi parmi le chlorotrifluoroéthylène (CTFE), l'hexafluoropropylène (HFP), le trifluoroéthylène (VF₃) et le tétrafluoroéthylène (TFE) ;
- les copolymères du TFE et de l'éthylène (ETFE) ;
- les homo- et copolymères du trifluoroéthylène (VF₃) ;
- les copolymères du type EFEP associant le VDF et le TFE (notamment les EFEP de Daikin) ;
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VDF et/ou VF₃.

Avantageusement, le polymère fluoré est un PVDF homo- ou copolymère. Ce polymère fluoré présente en effet une bonne résistance chimique, notamment aux UV et aux produits chimiques, et il se transforme facilement (plus facilement que le PTFE ou les copolymères de type ETFE). De préférence le PVDF contient, en poids, au moins 50% de VDF, plus préférentiellement au moins 75% et mieux encore au moins 85%. Le comonomère est avantageusement l'HFP.

Avantageusement, le PVDF a une viscosité allant de 100 Pa.s à 4000 Pa.s, la viscosité étant mesurée à 230°C, à un gradient de cisaillement de 100 s⁻¹ à l'aide d'un rhéomètre capillaire. En effet, ces PVDF sont bien adaptés à l'extrusion et a l'injection. De préférence, le PVDF a une viscosité allant de 300 Pa.s à 1200 Pa.s, la viscosité étant mesurée à 230°C, à un gradient de cisaillement de 100 s⁻¹ à l'aide d'un rhéomètre capillaire.

Ainsi, les PVDF commercialisés sous la marque KYNAR^{®} 710 ou 720 sont parfaitement adaptés pour cette formulation.

**S'agissant du monomère insaturé,** celui-ci possède une double liaison C=C ainsi qu'au moins une fonction polaire qui peut être une fonction :
- acide carboxylique,
- sel d'acide carboxylique,
- anhydride d'acide carboxylique,
- époxyde,
- ester d'acide carboxylique,
- silyle,
- alcoxysilane,
- amide carboxylique,
- hydroxy,
- isocyanate.

Des mélanges de plusieurs monomères insaturés sont également envisageables.

Des acides carboxyliques insaturés ayant 4 à 10 atomes de carbone et leurs dérivés fonctionnels, particulièrement leurs anhydrides, sont des monomères insaturés particulièrement préférés. Citons à titre d'exemples de monomères insaturés l'acide méthacrylique, l'acide acrylique, l'acide maléique, l'acide fumarique, l'acide itaconique, l'acide citraconique, l'acide undécylénique, l'acide allylsuccinique, l'acide cyclohex-4-ène-1,2-dicarboxylique, l'acide 4-méthyl-cyclohex-4-ène-1,2-dicarboxylique, l'acide bicyclo(2,2,1)hept-5-ène-2,3-dicarboxylique, l'acide x-méthylbicyclo(2,2,1-hept-5-ène-2,3-dicarboxylique, l'undécylénate de zinc, de calcium ou de sodium, l'anhydride maléique, l'anhydride itaconique, l'anhydride citraconique, l'anhydride dichloromaléique, l'anhydride difluoromaléique, l'anhydride itaconique, l'anhydride crotonique, l'acrylate ou le méthacrylate de glycidile, l'allyl glycidyl éther, les vinyles silanes tel que le vinyl triméthoxysilane, le vinyl triéthoxysilane, le vinyl triacétoxysilane, le γ-méthacryloxypropyltriméthoxysilane.

D'autres exemples de monomères insaturés comprennent des esters alkyliques en C₁-C₈ ou des dérivés esters glycidyliques des acides carboxyliques insaturés tels que l'acrylate de méthyle, le méthacrylate de méthyle, l'acrylate d'éthyle, le méthacrylate d'éthyle, l'acrylate de butyle, le méthacrylate de butyle, l'acrylate de glycidyle, le méthacrylate de glycidyle, le maléate de mono-éthyle, le maléate de diéthyle, le fumarate de monométhyle, le fumarate de diméthyle, l'itaconate de monométhyle, et l'itaconate de diéthyle ; des dérivés amides des acides carboxyliques insaturés tels que l'acrylamide, le méthacrylamide, le monoamide maléique, le diamide maléique, le N-monoéthylamide maléique, le N,N-diéthylamide maléique, le N-monobutylamide maléique, le N,N-dibutylamide maléique, le monoamide furamique, le diamide furamique, le N-monoéthylamide fumarique, le N,N-diéthylamide fumarique, le N-monobutylamide fumarique et le N,N-dibutylamide furamique ; des dérivés imides des acides carboxyliques insaturés tels que le maléimide, le N-butylmaléimide et le N-phénylmaléimide ; et des sels métalliques d'acides carboxyliques insaturés tels que l'acrylate de sodium, le méthacrylate de sodium, l'acrylate de potassium, le méthacrylate de potassium et les undécylénate de zinc, calcium ou sodium.

On exclut des monomères insaturés ceux qui présentent deux doubles liaisons C=C qui pourraient conduire à une réticulation du polymère fluoré, comme par exemple les di- ou triacrylates. De ce point de vue, l'anhydride maléique tout comme les undécylénates de zinc, calcium et sodium constituent de bons composés greffables car ils ont peu tendance à homopolymériser ni même à donner lieu à une réticulation.

Avantageusement, on utilise l'anhydride maléique. Ce monomère insaturé offre en effet les avantages suivants :
- il est solide et peut être facilement introduit avec les granulés de polymère fluoré avant le mélange à l'état fondu,
- il permet d'obtenir de bonnes propriétés d'adhésion,
- il est particulièrement réactif vis-à-vis des fonctions d'une polyoléfine fonctionnalisée, notamment lorsque ces fonctions sont des fonctions époxydes,
- à la différence d'autres monomères insaturés comme l'acide (méth)acrylique ou les esters acryliques, il n'homopolymérise pas et n'a pas à être stabilisé.

Dans le mélange à irradier, la proportion de polymère fluoré est comprise, en poids, entre 80 à 99,9% pour respectivement 0,1 à 20% de monomère insaturé. De préférence la proportion de polymère fluoré est de 90 à 99% pour respectivement 1 à 10% de monomère insaturé.

**S'agissant de la polyoléfine,** on désigne par ce terme un polymère comprenant majoritairement des motifs éthylène et/ou propylène. Il peut s'agir d'un polyéthylène, homo- ou copolymère, le comonomère étant choisi parmi le propylène, le butène, l'héxène ou l'octène. Il peut s'agir aussi d'un polypropylène, homo- ou copolymère, le comonomère étant choisi parmi l'éthylène, le butène, l'héxène ou l'octène.

Le polyéthylène peut être notamment le polyéthylène haute densité (PEHD), basse densité (PEBD), le polyéthylène basse densité linéaire (LLDPE), le polyéthylène très basse densité (VLDPE). Le polyéthylène peut être obtenu à l'aide d'un catalyseur Ziegler-Natta, Phillips ou de type métallocène ou encore par le procédé haute-pression. Le polypropylène est un polypropylène iso- ou syndiotactique.

Il peut s'agir aussi d'un polyéthylène réticulé (noté PEX). Le polyéthylène réticulé peut être par exemple un polyéthylène comprenant des groupements silanes hydrolysables (comme décrit dans les demandes WO 01/53367 ou US 20040127641 A1) qui a ensuite été réticulé après réaction entre eux des groupements silanes. La réaction des groupements silanes Si-OR entre eux conduit à des liaisons Si-O-Si qui relient les chaînes de polyéthylène entre elles. La teneur en groupements silanes hydrolysables peut être au moins de 0,1 groupements silanes hydrolysables pour 100 unités -CH₂- (déterminée par analyse infrarouge). Le polyéthylène peut aussi être réticulé à l'aide de radiations, par exemple de radiations gamma. Il peut s'agir aussi d'un polyéthylène réticulé à l'aide d'un amorceur radicalaire de type peroxyde. On pourra donc utiliser un PEX de type A (réticulation à l'aide d'un amorceur radicalaire), de type B (réticulation à l'aide de groupements silanes) ou de type C (réticulation par irradiation).

Il peut s'agir aussi d'un poléthylène dit bimodal, c'est-à-dire composé d'un mélange de polyéthylènes présentant des masses moléculaires moyennes différentes comme enseigné dans le document WO 00/60001**.** Le polyéthylène bimodal permet par exemple d'obtenir un compromis très intéressant de résistance aux chocs et au « stress-cracking » ainsi qu'une bonne rigidité et une bonne tenue à la pression.

Pour les tubes devant résister à la pression, notamment les tubes de transport de gaz sous pression ou de transport d'eau, on pourra utiliser avantageusement un polyéthylène qui présente une bonne résistance à la propagation lente de fissure (SCG) et à la propagation rapide de fissure (RCP). Le grade HDPE XS 10 B commercialisé par TOTAL PETROCHEMICALS présente une bonne résistance à la fissure (lente ou rapide). Il s'agit d'un PEHD contenant de l'hexène comme comonomère, ayant une densité de 0,959 g/cm³ (ISO 1183), un MI-5 de 0,3 dg/min (ISO 1133), un HLMI de 8 dg/min (ISO 1133), une résistance hydrostatique longue durée de 11,2 MPa selon **ISO/DIS 9080,** une résistance à la propagation lente de fissures sur tuyaux entaillés supérieure à 1000 heures selon **ISO/DIS 13479.**

**S'agissant de la polyoléfine fonctionnalisée,** on désigne par ce terme un copolymère de l'éthylène et d'au moins un monomère polaire insaturé choisi parmi :
- les (méth)acrylates d'alkyle en C₁-C₈, notamment le (méth)acrylate de méthyle, d'éthyle, de propyle, de butyle, de 2-éthylhexyle, d'isobutyle, de cyclohexyle ;
- les acides carboxyliques insaturés, leurs sels et leurs anhydrides, notamment l'acide acrylique, l'acide méthacrylique, l'anhydride maléique, l'anhydride itaconique, l'anhydride citraconique ;
- les époxydes insaturés, notamment les esters et éthers de glycidyle aliphatiques tels que l'allylglycidyléther, le vinylglycidyléther, le maléate et l'itaconate de glycidyle, l'acrylate et le méthacrylate de glycidyle, ainsi que les esters et éthers de glycidyle alicycliques ;
- les esters vinyliques d'acides carboxyliques saturés, notamment l'acétate de vinyle ou le propionate de vinyle.

La polyoléfine fonctionnalisée peut être obtenue par copolymérisation de l'éthylène et d'au moins un monomère polaire insaturé choisi dans la liste précédente. La polyoléfine fonctionnalisée peut être un copolymère de l'éthylène et d'un monomère polaire de la liste précédente ou bien un terpolymère de l'éthylène et de deux monomères polaires insaturés choisis dans la liste précédente. La copolymérisation s'opère à des pressions élevées supérieures à 1000 bar selon le procédé dit haute-pression. La polyoléfine fonctionnelle obtenue par copolymérisation comprend en poids de 50 à 99,9% d'éthylène, de préférence de 60 à 99,9%, encore plus préférentiellement de 65 à 99% et de 0,1 à 50%, de préférence de 0,1 à 40%, encore plus préférentiellement de 1 à 35% d'au moins un monomère polaire de la liste précédente.

A titre d'exemple, la polyoléfine fonctionnalisée peut être un copolymère de l'éthylène et d'un époxyde insaturé, de préférence du (méth)acrylate de glycidyle, et éventuellement d'un (méth)acrylate d'alkyle en C₁-C₈ ou d'un ester vinylique d'acide carboxylique saturé. La teneur en poids en époxyde insaturé, notamment en (méth)acrylate de glycidyle, est comprise entre 0,1 et 50%, avantageusement entre 0,1 et 40%, de préférence entre 1 à 35%, encore plus préférentiellement entre 1 et 20%. Il pourra s'agir par exemple des polyoléfines fonctionnalisées commercialisées par la société ARKEMA sous les références LOTADER^{®} AX8840 (8%poids de méthacrylate de glycidyle, 92%poids d'éthylène, melt-inder 5 selon ASTM D1238), LOTADER^{®} AX8900 (8%poids de méthacrylate de glycidyle, 25%poids d'acrylate de méthyle, 67%poids d'éthylène, melt-index 6 selon ASTM D1238), LOTADER^{®} AX8950 (9%poids de méthacrylate de glycidyle, 15%poids d'acrylate de méthyle, 76%poids d'éthylène, melt-index 85 selon ASTM D1238).

La polyoléfine fonctionnalisée peut aussi être un copolymère de l'éthylène et d'un anhydride d'acide carboxylique insaturé, de préférence l'anhydride maléique, et éventuellement d'un (méth)acrylate d'alkyle en C₁-C₈ ou d'un ester vinylique d'acide carboxylique saturé. La teneur en poids en anhydride d'acide carboxylique, notamment en anhydride maléique, est comprise entre 0,1 et 50%, avantageusement entre 0,1 et 40%, de préférence entre 1 à 35%, encore plus préférentiellement entre 1 et 10%. Il pourra s'agir par exemple des polyoléfines fonctionnalisées commercialisées par la société ARKEMA sous les références LOTADER^{®} 2210 (2,6%poids d'anhydride maléique, 6%poids d'acrylate de butyle et 91,4%poids d'éthylène, melt-index 3 selon ASTM D1238), LOTADER^{®} 3340 (3%poids d'anhydride maléique, 16%poids d'acrylate de butyle et 81%poids d'éthylène, melt-index 5 selon ASTM D1238), LOTADER^{®} 4720 (0,3%poids d'anhydride maléique, 30%poids d'acrylate d'éthyle et 69,7%poids d'éthylène, melt-inder 7 selon ASTM D1238), LOTADER^{®} 7500 (2,8%poids d'anhydride maléique, 20%poids d'acrylate de butyle et 77,2%poids d'éthylène, melt-index 70 selon ASTM D1238), OREVAC 9309, OREVAC 9314, OREVAC 9307Y, OREVAC 9318, OREVAC 9304 ou OREVAC 9305.

On désigne aussi par polyoléfine fonctionnalisée une polyoléfine sur laquelle est greffé par voie radicalaire un monomère polaire insaturé de la liste précédente. Le greffage a lieu en extrudeuse ou en solution en présence d'un amorceur radicalaire. A titre d'exemple d'amorceurs radicalaires, on pourra utiliser le t-butyl-hydroperoxyde, le cumène-hydroperoxyde, le di-iso-propyl-benzène-hydroperoxyde, le di-t-butyl-peroxyde, le t-butyl-cumyl-peroxyde, le dicumyl-peroxyde, le 1,3-bis-(t-butylperoxy-isopropyl)benzène, le benzoyl-peroxyde, l'iso-butyryl-peroxyde, le bis-3,5,5-triméthyl-hexanoyl-peroxyde ou le méthyl-éthyl-cétone-peroxyde. Le greffage d'un monomère polaire insaturé sur une polyoléfine est connu de l'homme du métier, pour plus de détails, on pourra se référer par exemple aux documents EP 689505, US 5235149, EP 658139, US 6750288 B2, US6528587 B2. La polyoléfine sur laquelle est greffé le monomère polaire insaturé peut être un polyéthylène, notamment le polyéthylène haute densité (PEHD) ou basse densité (PEBD), le polyéthylène basse densité linéaire (LLDPE), le polyéthylène très basse densité (VLDPE). Le polyéthylène peut être obtenu à l'aide d'un catalyseur Ziegler-Natta, Phillips ou de type métallocène ou encore par le procédé haute-pression. La polyoléfine peut être aussi un polypropylène, notamment un polypropylène iso- ou syndiotactique. Il peut s'agir aussi d'un copolymère de l'éthylène et du propylène de type EPR, ou un terpolymère de l'éthylène, d'un propylène et d'un diène de type EPDM. Il pourra s'agir par exemple des polyoléfines fonctionnalisées commercialisées par la société ARKEMA sous les références OREVAC 18302, 18334, 18350, 18360, 18365, 18370, 18380, 18707, 18729, 18732, 18750, 18760, PP-C, CA100.

Le polymère sur lequel est greffé le monomère polaire insaturé peut aussi être un copolymère de l'éthylène et d'au moins un monomère polaire insaturé choisi parmi:
- les (méth)acrylates d'alkyle en C₁-C₈, notamment le (méth)acrylate de méthyle, d'éthyle, de propyle, de butyle, de 2-éthylhexyle, d'isobutyle, de cyclohexyle ;
- les esters vinyliques d'acides carboxyliques saturés, notamment l'acétate de vinyle ou le propionate de vinyle.

Il pourra s'agir par exemple des polyoléfines fonctionnalisées commercialisées par la société ARKEMA sous les références OREVAC 18211, 18216 ou 18630. De préférence, on choisit la polyoléfine fonctionnalisée de telle sorte que les fonctions du monomère insaturé qui est greffé sur le polymère fluoré réagissent avec celles du monomère polaire de la polyoléfine fonctionnalisée. Par exemple, si on a greffé sur le polymère fluoré, un anhydride d'acide carboxylique, par exemple de l'anhydride maléique, la couche de polyoléfine fonctionnalisée peut être constituée d'un copolymère de l'éthylène, d'un époxyde insaturé, par exemple le méthacrylate de glycidyle, et éventuellement d'un acrylate d'alkyle, le copolymère de l'éthylène étant éventuellement mélangé avec une polyoléfine.

Selon un autre exemple, si on a greffé sur le polymère fluoré, un époxyde insaturé, par exemple le méthacrylate de glycidyle, la couche de polyoléfine fonctionnalisée peut être constituée d'un copolymère de l'éthylène, d'un anhydride d'acide carboxylique, par exemple l'anhydride maléique, et éventuellement d'un acrylate d'alkyle, le copolymère de l'éthylène étant éventuellement mélangé avec une polyoléfine.

### On décrit maintenant plus en détails le tube multicouche ainsi que toutes les variantes possibles.

Le tube multicouche comprend (dans l'ordre de l'intérieur vers l'extérieur du tube) :
- éventuellement une couche C₁ d'un polymère fluoré ;
- une couche C₂ d'un polymère fluoré greffé par irradiation, éventuellement en mélange avec un polymère fluoré ;
- éventuellement une couche C₃ de liant d'adhésion, cette couche C₃ étant directement attachée à la couche C₂ contenant le polymère fluoré greffé par irradiation ;
- une couche C₄ d'une polyoléfine, directement attachée à la couche C₃ éventuelle ou bien à la couche C₂ ;
- éventuellement une couche barrière C₅ ;
- éventuellement une couche C₆ d'une polyoléfine.

La couche interne qui est en contact avec le fluide est soit la couche C₁, soit la couche C₂. Toutes les couches du tube sont de préférence concentriques. Le tube est de préférence cylindrique. De préférence, les couches adhèrent entre elles dans leur zone de contact respectives (c'est-à-dire que deux couches successives sont directement attachées l'une à l'autre).

### avantages du tube multicouche

Le tube multicouche :
- présente une résistance chimique vis-à-vis du fluide transporté (via la couche C₁ et/ou C₂);
- freine la migration des contaminants du milieu extérieur vers le fluide transporté ;
- freine la migration des contaminants présents dans la polyoléfine de la couche C₄ et/ou de la couche C₆ vers le fluide tranporté ;
- freine la migration de l'oxygène ou des additifs présents dans le fluide transporté vers les couches C₄.

### La couche C₁ éventuelle

Cette couche comprend au moins un polymère fluoré (ce polymère fluoré n'est pas modifié par greffage par irradiation). De préférence, le polymère fluoré est un PVDF homo- ou copolymère ou bien un copolymère à base de VDF et de TFE du type EFEP.

### La couche C₂

Cette couche comprend au moins un polymère fluoré greffé par irradiation. Le polymère fluoré greffé par irradiation sert de liant entre la couche de polyoléfine et la couche de polymère fluoré. La couche C₂ est avantageusement directement attachée à la couche C₁.

Le polymère fluoré modifié par greffage par irradiation de la couche C₂ peut être utilisé seul ou éventuellement mélangé avec un polymère fluoré. Le mélange comprend dans ce cas en poids de 1 à 99%, avantageusement de 10 à 90%, de préférence de 10 à 50%, de polymère fluoré greffé par irradiation pour respectivement de 99 à 1%, avantageusement de 90 à 10%, de préférence de 50 à 90%, de polymère fluoré (non modifié par greffage).

Avantageusement, le polymère fluoré modifié par greffage utilisé dans la couche C₂ et le polymère non modifié par greffage par irradiation utilisé dans C₁ et/ou dans C₂ sont de même nature. Par exemple, il peut s'agir d'un PVDF modifié par greffage par irradiation et d'un PVDF non modifié.

### La couche C₃ éventuelle

La couche C₃ qui est disposée entre la couche C₂ et la couche C₄ a pour fonction de renforcer l'adhésion entre ces deux couches. Elle comprend un liant d'adhésion c'est-à-dire un polymère qui améliorer l'adhésion entre les couches.

Le liant d'adhésion est par exemple une polyoléfine fonctionalisée éventuellement mélangée avec une polyoléfine. Dans le cas où on utilise un mélange, celui-ci comprend en poids de 1 à 99%, avantageusement de 10 à 90%, de préférence de 50 à 90%, de polyoléfine fonctionnalisée pour respectivement de 99 à 1%, avantageusement de 90 à 10%, de préférence de 10 à 50%, de polyoléfine. La polyoléfine qui est utilisée pour le mélange avec la polyoléfine fonctionnalisée est de préférence un polyéthylène car ces deux polymères présentent une bonne compatibilité. La couche C₃ peut aussi comprendre un mélange de deux ou plusieurs polyoléfines fonctionnalisées. Par exemple, il peut s'agir d'un mélange d'un copolymère de l'éthylène et d'un époxyde insaturé et éventuellement d'un (méth)acrylate d'alkyle et d'un copolymère de l'éthylène et d'un (méth)acrylate d'alkyle.

### La couche C₄

La couche C₄ comprend au moins une polyoléfine éventuellement en mélange avec une polyoléfine fonctionnalisée.

Dans le cas d'un mélange, celui-ci comprend en poids de 1 à 99%, avantageusement de 10 à 90%, de préférence de 10 à 50%, de polyoléfine fonctionnalisée pour respectivement de 99 à 1%, avantageusement de 90 à 10%, de préférence de 50 à 90%, de polyoléfine. La polyoléfine qui est utilisée pour le mélange avec la polyoléfine fonctionnalisée est de préférence un polyéthylène car ces deux polymères présentent une bonne compatibilité.

De préférence, lorsqu'on utilise une polyoléfine fonctionnalisée pour la couche C₄ ou pour la couche C₃ et que l'une de ces couches est en contact direct avec la couche C₂, on choisit la polyoléfine fonctionalisée de sorte qu'elle possède des fonctions capables de réagir avec les fonctions greffées sur le polymère fluoré. Ainsi, par exemple, si on a greffé des fonctions anhydride sur le polymère fluoré, la polyoléfine fonctionnalisée comprendra avantageusement des fonctions époxyde ou hydroxy. Par exemple encore, si on a greffé des fonctions époxyde ou hydroxy sur le polymère fluoré, la polyoléfine fonctionnalisée comprendra avantageusement des fonctions anhydride.

La couche interne qui est en contact avec le fluide est soit la couche C₁ soit la couche C₂.

### La couche barrière C₅ éventuelle

La fonction de la couche barrière est d'empêcher la diffusion de composés chimiques de l'extérieur du tube vers l'intérieur ou l'inverse. Par exemple, elle permet d'éviter la contamination du fluide par des contaminants. L'oxygène et les produits chimiques comme les hydrocarbures par exemple sont des contaminants. Dans le cas plus spécifique des gaz, l'humidité peut être considéré comme un contaminant.

La couche barrière peut être en polymère barrière comme par exemple le polydiméthylcétène. Le polydiméthylcétène peut être obtenu par la pyrolyse de l'anhydride isobutyrique tel qu'elle est envisagée dans les demandes FR 2851562 et FR 2851562 qui sont incorporées ici par référence. Un procédé pour aboutir au polydiméthylcétène est le suivant : a) on préchauffe à pression atmosphérique entre 300 et 340°C un mélange comprenant 1 à 50 % en volume d'anydride idobutyrique pour respectivement 99 à 50 % d'un gaz inerte, b) puis ce mélange est porté à une température comprise entre 400 et 550°C pendant un 30 temps compris entre 0,05 et 10 s pour obtenir un mélange de diméthylcétène, de gaz inerte, d'acide isobutyrique et d'anhydride isobutyrique n'ayant pas réagi, c) le courant précédent est refroidi pour séparer le diméthylcétène et le gaz inerte de l'alcool isobutyrique et de l'anhydride isobutyrique, d) le diméthylcétène est absorbé dans un solvant de type hydrocarbure saturé ou insaturé, aliphatique ou alicyclique et substitué ou non substitué, puis on amorce la polymérisation du diméthylcétène à l'aide d'un système de catalyse cationique soluble dans ce solvant et comprenant un amorceur, un catalyseur et un co-catalyseur, e) à la fin de la polymérisation, on élimine le diméthylcétène qui n'a pas réagi et on sépare le polydiméthylcétène du solvant et des restes du système de catalyse. Le catalyseur peut être par exemple AlBr₃, l'amorceur est par exemple le chlorure de tertiobutyle et l'ochloranyl est par exemple le co-catalyseur.

Pour améliorer l'adhésion de la couche barrière C₅, une couche de liant d'adhésion est avantageusement disposée entre la couche barrière C₅ et la couche de polyoléfine C₄ et/ou entre la couche barrière C₅ et l'éventuelle couche de polyoléfine C₆. Le liant d'adhésion est par exemple un polymère fonctionnalisé qui a été décrit plus haut. Par exemple, il peut s'agir d'une polyoléfine fonctionalisée obtenue par greffage radicalaire. Il s'agit avantageusement d'une polyoléfine sur laquelle est greffé un acide carboxylique ou un anhydride d'acide carboxylique, par exemple de l'acide (méth)acrylique ou de l'anhydride maléique. Il peut donc s'agir d'un polyéthylène sur lequel est greffé de l'acide (méth)acrylique ou de l'anhydride maléique ou d'un polypropylène sur lequel est greffé de l'acide (méth)acrylique ou de l'anhydride maléique. On peut citer à titre d'exemple les polyoléfines fonctionnalisées commercialisées par la société ARKEMA sous les références OREVAC 18302, 18334, 18350, 18360, 18365, 18370, 18380, 18707, 18729, 18732, 18750, 18760, PP-C, CA100 ou par la société UNIROYAL CHEMICAL sous la référence POLYBOND 1002 ou 1009 (polyéthylène sur lequel est greffé de l'acide acrylique).

### La couche C₆ éventuelle

Le tube peut éventuellement comprendre une couche C₆ comprenant au moins une polyoléfine. Les polyoléfines des couches C₄ et C₆ peuvent être identiques ou différentes. La couche C₆ permet de protéger mécaniquement le tube (par ex. contre les chocs portés sur le tube lorsqu'il est installé), en particulier de protéger la couche C₄ ou la couche barrière C₅ lorsque celle-ci est présente. Elle permet aussi de renforcer mécaniquement le tube tout entier, ce qui peut permettre de réduire les épaisseurs des autres couches. Pour ce faire, la couche C₆ peut comprendre au moins un agent de renforcement, comme par exemple une charge minérale.

Grâce à ses bonnes propriétés thermomécaniques, le PEX est utilisé avantageusement pour la couche C₄ et/ou pour la couche C₆.

Chacune des couches du tube multicouche, notamment la ou les couches de polyoléfine, peut contenir des additifs habituellement utilisés en mélange avec des thermoplastiques, par exemple des antioxydants, des agents lubrifiants, des colorants, des agents ignifugeants, des charges minérales ou organiques, des agents antistatiques comme par exemple du noir de carbone ou des nanotubes de carbone. Le tube peut aussi comprendre d'autres couches, comme par exemple une couche extérieure isolante.

### On décrit maintenant différentes formes du tube selon l'invention

Selon une 1^{ére} forme, le tube comprend (dans l'ordre intérieur vers extérieur du tube) une couche C₂ et directement attachée à celle-ci une couche C₄.

Selon une 2^{ème} forme, le tube comprend (dans l'ordre intérieur vers extérieur du tube) une couche C₁, une couche C₂, et directement attachée à celle-ci, une couche C₄.

Selon une 3^{ème} forme, le tube comprend (dans l'ordre intérieur vers extérieur du tube) une couche C₁, une couche C₂, une couche C₃ directement attachée à la couche C₂, une couche C₄ directement attachée à la couche C₃, une couche C₅ et une couche C₆.

### exemple de tube selon la 3^{ème} forme (best mode) :

C₁ : PVDF homo- ou copolymère ;
C₂ : PVDF homo- ou copolymère sur lequel on a greffé par irradiation de l'anhydride maléique (selon le procédé décrit précédemment) ;
C₃ : liant d'adhésion, de préférence il s'agit d'une polyoléfine fonctionalisée possédant des fonctions capables de réagir avec l'anhydride maléique, éventuellement mélangée avec une polyoléfine. Avantageusement, il s'agit d'une polyoléfine fonctionalisée possédant des fonctions époxyde ou hydroxy. Par exemple, il peut s'agir d'un copolymère de l'éthylène, d'un époxyde insaturé, par exemple le méthacrylate de glycidyle, et éventuellement d'un acrylate d'alkyle.
C₄ : polyéthylène, de préférence de type PEX ;
C₅ : couche barrière ;
C₆ : polyéthylène, de préférence de type PEX.

De préférence, une couche de liant d'adhésion est disposée entre C₅ et C₄ et/ou entre C₅ et C₆. De préférence, le liant d'adhésion est une polyoléfine fonctionalisée.

### Epaisseur des couches

De préférence, les couches C₁, C₂, C₃ et C₅ présentent chacune une épaisseur comprise entre 0,01 et 30 mm, avantageusement entre 0,05 et 20 mm, de préférence entre 0,05 et 10 mm. Les couches de polyoléfine C₄ et C₆ présentent de préférence chacune une épaisseur comprise entre 0,1 et 10000 mm, avantageusement entre 0,5 et 2000 mm, de préférence entre 0,5 et 1000 mm.

### Obtention des tubes

Le tube peut être fabriqué par la technique de coextrusion. Cette technique s'appuie sur l'utilisation d'autant d'extrudeuses qu'il y a de couches à extruder.

Lorsque la polyoléfine de la couche C₄ et/ou de l'éventuelle couche C₆ est un PEX de type B (réticulation par groupements silanes), on commence par extruder la polyoléfine non réticulée. La réticulation est réalisée en plongeant les tubes extrudés dans des piscines d'eau chaude pour amorcer la réticulation. Avec un PEX de type A (réticulation à l'aide d'un amorceur radicalaire), la réticulation est réalisée à l'aide d'un amorceur radicalaire qui s'active thermiquement lors de l'extrusion. Avec un PEX de type C, on commence par extruder toutes les couches, puis on irradie le tube tout entier pour amorcer la réticulation du polyéthylène. L'irradiation se fait à l'aide d'un faisceau d'électrons de 3 à 35 Mrad.

L'invention a aussi trait au procédé de fabrication du tube multicouche ayant au moins une couche de PEX de type C dans lequel :
- on coextrude les différentes couches du tube multicouche ;
- puis, on expose le tube multicouche ainsi formé à une irradiation pour réticuler la ou les couches de polyéthylène.

### Utilisation du tube

Le tube multicouche peut être utilisé pour le transport de différents fluides.

Le tube est approprié pour le transport de l'eau, notamment de l'eau chaude, en particulier le transport d'eau chaude en réseau. Le tube peut être utilisé pour le transport d'eau chaude de chauffage (température supérieure à 60°C, voire 90°C). Un exemple d'application intéressante est celle du chauffage radiant par le sol (plancher radiant) dans lequel le tube utilisé pour véhiculer l'eau chaude est disposé sous le sol ou le plancher. L'eau est chauffée par une chaudière et véhiculée à travers le tube. Un autre exemple est celui dans lequel le tube sert à véhiculer l'eau chaude vers un radiateur. Le tube peut donc être utilisé pour les systèmes de chauffage d'eau par rayonnement. L'invention est aussi relative à un système de chauffage en réseau comprenant le tube de l'invention.

La résistance chimique du tube est adaptée à une eau contenant des additifs chimiques (généralement en faibles quantités, inférieures à 1%) qui peuvent altérer les polyoléfines, notamment le polyéthylène, surtout à chaud. Ces additifs peuvent être des agents oxydants tels que le chlore et l'acide hypochloreux, des dérivés chlorés, de l'eau de javel, de l'ozone, ...

Pour les applications dans lesquelles l'eau qui circule est une eau potable, une eau destinée à des applications médicales ou pharmaceutiques ou un liquide biologique, il est préférable d'avoir une couche de polymère fluoré non modifié comme couche en contact avec l'eau (couche C₁). Les microorganismes (bactéries, germes, moisissures, ...) ont peu tendance à se développer sur un polymère fluoré, notamment sur le PVDF. De plus, il est préférable que la couche en contact avec l'eau ou le liquide biologique soit une couche de polymère fluoré non modifié qu'une couche de polymère fluoré modifié pour éviter la migration de monomère insaturé non-greffé (libre) dans l'eau ou le liquide biologique.

Les propriétés barrière du tube le rende utilisable pour le transport d'eau dans les terrains pollués en freinant la migration des contaminants vers le fluide transporté. Les propriétés barrière sont aussi utiles pour éviter la migration de l'oxygène dans l'eau (DIN 4726), ce qui peut être néfaste dans le cas où le tube est utilisé pour transporter l'eau chaude de chauffage (la présence d'oxygène est source de corrosion des pièces en acier ou en fer de l'installation de chauffage). On souhaite également freiner la migration des contaminants présents dans la couche de polyoléfine (antioxydants, résidus de polymérisation,...) vers le fluide transporté.

Plus généralement, le tube multicouche est utilisable pour le transport de produits chimiques, notamment ceux susceptibles de dégrader chimiquement les polyoléfines.

Le tube multicouche peut aussi être utilisé pour le transport d'un gaz, notamment d'un gaz sous pression. Lorsque la polyoléfine est un polyéthylène de type PE80 ou un PE100, il est notamment adapté pour une tenue à des pressions supérieures à 10 bar, voire supérieures à 20 bar, voire encore supérieures à 30 bar. Le gaz peut être de différente nature. Il peut s'agir par exemple :
- d'un hydrocarbure gazeux (par exemple le gaz de ville, un alcane gazeux, notamment l'éthane, le propane, le butane, un alcène gazeux, notamment l'éthylène, le propylène, le butène),
- de l'azote,
- de l'hélium,
- de l'hydrogène,
- de l'oxygène,
- d'un gaz corrosif ou susceptible de dégrader le polyéthylène ou le polypropylène. Par exemple, il peut s'agir d'un gaz acide ou corrosif, tel que H₂S ou HCl ou HF.

On mentionnera aussi l'intérêt de ces tubes pour les applications liées à la climatisation dans lesquelles le gaz qui circule est un cryogène. Il peut s'agir de CO₂, notamment de CO₂ supercritique, de gaz HFC ou HCFC. La couche C₁ éventuelle ou bien la couche C₂ résistent bien à ces gaz car il s'agit de polymères fluorés. De préférence, le polymère fluoré des couches C₁ et C₂ est du PVDF, car il résiste particulièrement bien. Il est possible que le cryogène condense en certains points du circuit de climatisation et soit liquide. Le tube multicouche peut donc aussi s'appliquer au cas où le gaz cryogène a condensé sous forme liquide.

### [Exemples]

### Préparation du KYNAR^{®} 720 modifié

On prépare un mélange de PVDF KYNAR^{®} 720 de la société ARKEMA et de 2% en masse d'anhydride maléique. Ce mélange est préparé en utilisant une extrudeuse bi-vis fonctionnant à 230°C et 150 tr/minute à un débit de 10 kg/h. Le produit granulé ainsi préparé et ensaché dans des sacs étanches en aluminium, puis l'oxygène est éliminé à l'aide d'un balayage avec un courant d'argon. Ces sacs sont ensuite irradiés par un rayonnement gamma (bombe au Cobalt 60) sous 3 Mrad (accélération de 10 MeV) pendant 17 heures. Un taux de greffage de 50 % est déterminé, ce taux est vérifié après une étape de solubilisation dans la N-méthyl pyrrolidone puis précipitation dans un mélange eau/THF (50/50 en poids). Le produit obtenu après l'opération de greffage est alors placé sous vide pendant une nuit à 130°C pour évacuer l'anhydride maléique résiduel et l'acide fluorhydrique libéré lors de l'irradiation. La teneur finale en anhydride maléïque greffé est de 1% (analyse par spectroscopie infrarouge sur la bande C=O vers 1870 cm⁻¹).

### préparation d'un tube multicouche

On fabrique un tube présentant la structure suivante à l'aide de la technique de coextrusion : KYNAR^{®} 720 modifié (300 µm) / LOTADER^{®} AX 8840 (100 µm) / PEX (2600 µm). La couche de PEX est la couche externe. Le LOTADER joue le rôle de liant d'adhésion entre le PVDF modifié et le PEX. Toutes les couches adhèrent entre-elles dans l'ordre indiqué.

Le tube est obtenu par coextrusion d'une couche de polyéthylène modifié par des groupements silanes (température d'extrusion de l'ordre de 230°C), d'une couche de LOTADER^{®} AX8840 (température d'extrusion de l'ordre de 250°C) et d'une couche d'un KYNAR^{®} 720 sur lequel on a greffé par irradiation 1 %poids d'anhydride maléique (température d'extrusion de l'ordre de 250°C). L'extrudeuse utilisée est une McNeil. La température de la tête de coextrusion est de 265°C et la température de la filière est de 250°C. L'épaisseur respective des couches est (pour un tube de diamètre externe de 32 mm) de 2,6 mm de PEX, 100 µm de LOTADER^{®} AX8840 et 300 µm de KYNAR^{®} 720 modifié.

La couche de polyéthylène est obtenue par extrusion d'un mélange maître contenant 95% du grade BORPEX^{®} ME 2510 de Borealis et de 5% de MB 51 de Borealis. L'adhésion entre les couches 5 jours après l'extrusion est mesurée à 50 N/cm. Le tube est placé dans un bac d'eau chaude à 60°C pendant 72 h pour qu'il y ait formation du PEX. Le taux de gel obtenu sur le tube est mesuré par une technique de dissolution à 75% de taux de gel.

## Revendications

1. Tube multicouche comprenant (dans l'ordre de l'intérieur vers l'extérieur du tube) :
• une couche C₂ d'un polymère fluoré sur lequel est greffé par irradiation au moins un monomère insaturé, éventuellement en mélange avec un polymère fluoré ;
• une couche C₃ de liant d'adhésion, cette couche C₃ étant directement attachée à la couche C₂ contenant le polymère fluoré greffé par irradiation ;
• une couche C₄ d'une polyoléfine éventuellement en mélange avec une polyoléfine fonctionnalisée, directement attachée à la couche C₃, dans lequel le monomère insaturé qui est greffé est choisi parmi l'acide méthacrylique, l'acide acrylique, l'acide maléique, l'acide fumarique, l'acide itaconique, l'acide citraconique, l'acide undécylénique, l'acide allylsuccinique, l'acide cyclohex-4-ène-1,2-dicarboxylique, l'acide 4-méthyl-cyclohex-4-ène-1,2-dicarboxylique, l'acide bicyclo(2,2,1)hept-5-ène-2,3-dicarboxylique, l'acide x-méthylbicyclo(2,2,1-hept-5-ène-2,3-dicarboxylique, l'undécylénate de zinc, de calcium ou de sodium, l'anhydride maléique, l'anhydride itaconique, l'anhydride citraconique, l'anhydride dichloromaléique, l'anhydride difluoromaléique, l'anhydride itaconique, l'anhydride crotonique, l'acrylate ou le méthacrylate de glycidile, l'allyl glycidyl éther, les vinyles silanes tel que le vinyl triméthoxysilane, le vinyl triéthoxysilane, le vinyl triacétoxysilane, le γ-méthacryloxypropyltriméthoxysilane.

2. Tube multicouche selon la revendication 1, comprenant en outre une couche C₁ d'un polymère fluoré.

3. Tube multicouche selon l'une des revendications 1 et 2 comprenant en outre une couche barrière C₅.

4. Tube multicouche selon l'une des revendications 1 à 3 comprenant en outre une couche barrière C₆ d'une polyoléfine.

5. Tube multicouche selon la revendication 1, comprenant (dans l'ordre intérieur vers extérieur du tube) une couche C₁, une couche C₂, une couche C₃ directement attachée à la couche C₂, une couche C₄ directement attachée à la couche C₃, une couche C₅ et une couche C₆.

6. Tube multicouche selon l'une quelconque des revendications précédentes dans lequel les couches adhèrent entre elles dans leurs zones de contact respectives.

7. Tube multicouche selon l'une quelconque des revendications précédentes dans lequel le polymère fluoré de la couche C₁ et/ou de la couche C₂ est un polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

8. Tube multicouche selon l'une quelconque des revendications précédentes dans lequel le polymère fluoré de la couche C₁ et/ou de la couche C₂ est un homo- ou copolymère du VDF contenant au moins 50% en poids de VDF ou bien un EFEP.

9. Tube multicouche selon l'une quelconque des revendications précédentes dans lequel le polymère fluoré sur lequel est greffé le monomère insaturé est un homo- ou copolymère du VDF contenant au moins 50% en poids de VDF ou bien un EFEP.

10. Tube multicouche selon l'une quelconque des revendications précédentes dans lequel le liant d'adhésion est une polyoléfine fonctionnalisée éventuellement mélangée avec une polyoléfine.

11. Tube multicouche selon la revendication 10 dans lequel la polyoléfine fonctionnalisée possède des fonctions capables de réagir avec les fonctions greffées sur le polymère fluoré lorsque la couche C₃ est en contact direct avec la couche C₂.

12. Tube multicouche selon l'une quelconque des revendications précédentes dans lequel la polyoléfine de la couche C₄ et/ou de la couche C₆ est polymère comprenant majoritairement des motifs éthylène et/ou propylène.

13. Tube multicouche selon la revendication 12 dans lequel la polyoléfine est polyéthylène, homo- ou copolymère, un polypropylène, homo- ou copolymère.

14. Tube multicouche selon la revendication 13 dans lequel la polyoléfine est un PEX.

15. Tube multicouche selon l'une quelconque des revendications 1, 5 à 11 et 12 à 14 comprenant (dans l'ordre de l'intérieur vers l'extérieur du tube) :
• une couche C₁ d'un PVDF homo- ou copolymère ;
• une couche C₂ d'un PVDF homo- ou copolymère sur lequel on a greffé par irradiation de l'anhydride maléique ;
• une couche C₃ de liant d'adhésion ;
• une couche C₄ de polyéthylène, de préférence de type PEX ;
• une couche barrière C₅ ;
• une couche C₆ de polyéthylène, de préférence de type PEX.

16. Tube multicouche selon la revendication 15 dans lequel une couche de liant d'adhésion est disposée entre C₅ et C₄ et/ou entre C₅ et C₆.

17. Tube multicouche selon l'une des revendications 15 ou 16 dans lequel les couches adhèrent entre elles dans leurs zones de contact respectives.

18. Tube multicouche selon l'une des revendications 15 à 17 dans lequel le liant d'adhésion est une polyoléfine fonctionnalisée possédant des fonctions capables de réagir avec l'anhydride maléique, éventuellement mélangée avec une polyoléfine.

19. Tube multicouche selon la revendication 18 dans lequel la polyoléfine fonctionnalisée possède des fonctions époxyde ou hydroxy.

20. Tube multicouche selon l'une des revendications 18 ou 19 dans lequel la polyoléfine fonctionnalisée est un copolymère de l'éthylène, d'un époxyde insaturé, par exemple le méthacrylate de glycidyle, et éventuellement d'un acrylate d'alkyle.

21. Tube multicouche selon l'une quelconque des revendications 2 et 6-11 dans lequel ladite couche C3 de liant d'adhésion est une polyoléfine fonctionnalisée, un copolymère d'éthylène et d'un époxyde insaturé, de préférence du (méth)acrylate de glycidyle, et éventuellement d'un (méth)acrylate d'alkyle en C₁-C₈, et ladite couche C4 de polyoléfine comprend majoritairement des motifs éthylène et/ou propylène.

22. Utilisation d'un tube tel que défini à l'une quelconque des revendications 1 à 21, pour le transport de l'eau, notamment de l'eau chaude, de produits chimiques, d'un gaz.

23. Utilisation d'un tube tel que défini à l'une quelconque des revendications 1 à 21 pour véhiculer l'eau chaude dans un chauffage radiant par le sol (plancher radiant) ou pour véhiculer l'eau chaude vers un élément radiant.

24. Utilisation d'un tube tel que défini à l'une quelconque des revendications 1 à 21 dans les systèmes de chauffage par rayonnement.

25. Utilisation selon la revendication 22, **caractérisée en ce que** le gaz est un hydrocarbure gazeux, l'azote, l'hélium, l'hydrogène, l'oxygène, un gaz corrosif ou susceptible de dégrader le polyéthylène ou le polypropylène, un cryogène.

26. Procédé de fabrication d'un tube multicouche tel que défini à l'une des revendications 1 à 21, ayant au moins une couche de PEX de type C dans lequel :
• on coextrude les différentes couches du tube multicouche ;
• puis, on expose le tube multicouche ainsi formé à une irradiation pour réticuler la ou les couches de polyéthylène.

27. Système de chauffage par rayonnement comprenant au moins un tube selon l'une quelconque des revendications 1 à 21.

## Patentansprüche

1. Mehrschichtrohr, das (in der folgenden Reihenfolge von der Innenseite des Rohrs nach außen) aufweist:
• eine Schicht C₂ aus einem fluorierten Polymer, auf das mittels Bestrahlen zumindest ein ungesättigtes Monomer gepfropft wurde, gegebenenfalls im Gemisch mit einem fluorierten Polymer;
• eine Haftvermittlerschicht C₃, wobei die Schicht direkt an die Schicht C₂ gebunden ist, die das durch Bestrahlen gepfropfte fluorierte Polymer enthält;
• eine Schicht C₄ aus einem Polyolefin gegebenenfalls im Gemisch mit einem funktionalisierten Polyolefin, die direkt an die Schicht C₃ gebunden ist;
wobei das ungesättigte Monomer, das gepfropft wurde, unter Methacrylsäure, Acrylsäure, Maleinsäure, Fumarsäure, Itaconsäure, Citraconsäure, Undecylensäure, Allylbernsteinsäure, Cyclohex-4-en-1,2-dicarbonsäure, 4-Methyl-cyclohex-4-en-1,2-dicarbonsäure, Bicyclo(2.2.1)hept-5-en-2,3-dicarbonsäure, x-Methyl-bicyclo(2.2.1)hept-5-en-2,3-dicarbonsäure, Zink-, Calcium- oder Natriumundecylenat, Maleinsäureanhydrid, Itaconsäureanhydrid, Citraconsäureanhydrid, Dichlormaleinsäureanhydrid, Difluormaleinsäureanhydrid, Itaconsäureanhydrid, Crotonsäureanhydrid, Glycidylacrylat oder -methacrylat, Allylglycidylether, Vinylsilanen, wie Vinyltrimethoxysilan, Vinyltriethoxysilan, Vinyltriacetoxysilan, γ-Methacryloxypropyltrimethoxysilan, ausgewählt ist.

2. Mehrschichtrohr nach Anspruch 1, das ferner eine Schicht C₁ 803-76350EP-AS/AS aus einem fluorierten Polymer aufweist.

3. Mehrschichtrohr nach einem der Ansprüche 1 und 2, das ferner eine Barriereschicht C₅ aufweist.

4. Mehrschichtrohr nach einem der Ansprüche 1 bis 3, das ferner eine Barriereschicht C₆ aus einem Polyolefin aufweist.

5. Mehrschichtrohr nach Anspruch 1, das (in der folgenden Reihenfolge von innen in Richtung zur Außenseite des Rohrs) eine Schicht C₁, eine Schicht C₂, eine direkt an die Schicht C₂ gebundene Schicht C₃, eine direkt an die Schicht C₃ gebundene Schicht C₄, eine Schicht C₅ und eine Schicht C₆ aufweist.

6. Mehrschichtrohr nach einem der vorhergehenden Ansprüche, wobei die Schichten in ihren jeweiligen Kontaktbereichen aneinander haften.

7. Mehrschichtrohr nach einem der vorhergehenden Ansprüche, wobei das fluorierte Polymer der Schicht C₁ und/oder der Schicht C₂ ein Polymer ist, das in seiner Kette mindestens ein Monomer enthält, das unter den Verbindungen mit Vinylgruppe ausgewählt ist, die sich zum Polymerisieren öffnen und direkt benachbart zur Vinylgruppe zumindest ein Fluoratom, eine Fluoralkylgruppe oder eine Fluoralkoxygruppe enthalten.

8. Mehrschichtrohr nach einem der vorhergehenden Ansprüche, wobei es sich bei dem fluorierten Polymer der Schicht C₁ und/oder der Schicht C₂ um ein Homo- oder Copolymer von VDF, das mindestens 50 Gew.-% VDF enthält, oder ein EFEP handelt.

9. Mehrschichtrohr nach einem der vorhergehenden Ansprüche, wobei es sich bei dem fluorierten Polymer, auf das das ungesättigte Monomer gepfropft ist, um ein Homo- oder Copolymer von VDF, das mindestens 50 Gew.-% VDF enthält, oder ein EFEP handelt.

10. Mehrschichtrohr nach einem der vorhergehenden Ansprüche, wobei es sich bei dem Haftvermittler um ein funktionalisiertes Polyolefin gegebenenfalls im Gemisch mit einem Polyolefin handelt.

11. Mehrschichtrohr nach Anspruch 10, wobei das funktionalisierte Polyolefin Funktionen besitzt, die mit den auf das fluorierte Polymer gepfropften Funktionen reagieren können, wenn die Schicht C₃ direkt in Kontakt mit der Schicht C₂ ist.

12. Mehrschichtrohr nach einem der vorhergehenden Ansprüche, wobei es sich bei dem Polyolefin der Schicht C₄ und/oder der Schicht C₆ um ein Polymer handelt, das hauptsächlich Ethyleneinheiten und/oder Propyleneinheiten aufweist.

13. Mehrschichtrohr nach Anspruch 12, wobei es sich bei dem Polyolefin um ein Polyethylen-Homopolymer oder -Copolymer oder ein Polypropylen-Homopolymer oder -Copolymer handelt.

14. Mehrschichtrohr nach Anspruch 13, wobei es sich bei dem Polyolefin um ein PEX handelt.

15. Mehrschichtrohr nach einem der Ansprüche 1, 5 bis 11 und 12 bis 14, das (in der folgenden Reihenfolge von innen in Richtung zur Außenseite des Rohrs) aufweist:
• eine Schicht C₁ eines PVDF-Homo- oder PVDF-Copolymers;
• eine Schicht C₂ eines PVDF-Homo- oder PVDF-Copolymers, auf die mittels Bestrahlen Maleinsäureanhydrid gepfropft wurde;
• eine Haftvermittlerschicht C₃;
• eine Schicht C₄ aus Polyethylen, vorzugsweise vom PEX-Typ;
• eine Barriereschicht C₅;
• eine Schicht C₆ aus Polyethylen, vorzugsweise vom PEX-Typ.

16. Mehrschichtrohr nach Anspruch 15, wobei zwischen C₅ und C₄ und/oder zwischen C₅ und C₆ eine Haftvermittlerschicht vorgesehen ist.

17. Mehrschichtrohr nach einem der Ansprüche 15 oder 16, wobei die Schichten in ihren jeweiligen Kontaktbereichen aneinander haften.

18. Mehrschichtrohr nach einem der Ansprüche 15 bis 17, wobei es sich bei dem Haftvermittler um ein funktionalisiertes Polyolefin, das Funktionen besitzt, die mit Maleinsäureanhydrid reagieren können, gegebenenfalls im Gemisch mit einem Polyolefin handelt.

19. Mehrschichtrohr nach Anspruch 18, wobei das funktionalisierte Polyolefin Epoxy- oder Hydroxyfunktionen aufweist.

20. Mehrschichtrohr nach Anspruch 18 oder 19, wobei das funktionalisierte Polyolefin ein Copolymer von Ethylen, einem ungesättigten Epoxid, beispielsweise Glycidylmethacrylat, und gegebenenfalls einem Alkylacrylat ist.

21. Mehrschichtrohr nach einem der Ansprüche 2 und 6 bis 11, wobei es sich bei der Haftvermittlerschicht C₃ um ein funktionalisierte Polyolefin, ein Copolymer aus Ethylen und einem ungesättigten Epoxid, vorzugsweise Glycidyl(meth)acrylat, und gegebenenfalls einem C₁₋₈-Alkyl(meth)acrylat handelt und die Polyolefinschicht C₄ hauptsächlich Ethyleneinheiten und/oder Propyleneinheiten aufweist.

22. Verwendung eines in einem der Ansprüche 1 bis 21 definierten Rohrs zum Transport von Wasser, insbesondere heißem Wasser, chemischen Produkten und einem Gas.

23. Verwendung eines in einem der Ansprüche 1 bis 21 definierten Rohrs zum Befördern von heißem Wasser in einem Fußbodenflächenheizsystem (Fußbodenheizung) oder zum Befördern von heißem Wasser zu einem Heizkörperelement.

24. Verwendung eines in einem der Ansprüche 1 bis 21 definierten Rohrs in Strahlungsheizsystemen.

25. Verwendung nach Anspruch 22, **dadurch gekennzeichnet, dass** das es sich bei dem Gas um einen gasförmigen Kohlenwasserstoff, Stickstoff, Helium, Wasserstoff, Sauerstoff, ein korrosives oder ein Polyethylen oder Polypropylen zersetzendes Gas oder ein Kryogen handelt.

26. Verfahren zur Herstellung eines in einem der Ansprüche 1 bis 21 definierten Mehrschichtrohrs, das mindestens eine PEX-Schicht vom Typ C aufweist, worin:
• die verschiedenen Schichten des Mehrschichtrohrs coextrudiert werden;
• anschließend das auf diese Weise gebildete Mehrschichtrohr bestrahlt wird, um die Polyethylen-Schicht oder die Polyethylen-Schichten zu vernetzten.

27. Strahlungsheizsystem, das mindestens ein Rohr nach einem der Ansprüche 1 bis 21 aufweist.

## Claims

1. Multilayer pipe which comprises (in the following order, from the inside of the pipe outwards):
• a layer C₂ of a fluoropolymer onto which at least one unsaturated monomer has been radiation-grafted, optionally blended with a fluoropolymer;
• an adhesion tie layer C₃, this layer C₃ being directly attached to the layer C₂ containing the radiation-grafted fluoropolymer;
• a layer C₄ of a polyolefin optionally blended with a functionalized polyolefin, directly attached to the optional layer C₃,
in which the unsaturated monomer that is grafted is methacrylic acid, acrylic acid, maleic acid, fumaric acid, itaconic acid, citraconic acid, undecylenic acid, allylsuccinic acid, cyclohex-4-ene-1,2-dicarboxylic acid, 4-methylcyclohex-4-ene-1,2-dicarboxylic acid, bicyclo[2.2.1]hept-5-ene-2,3-dicarboxylic acid, x-methylbicyclo-[2.2.1]hept-5-ene-2,3-dicarboxylic acid, zinc, calcium or sodium undecylenate, maleic anhydride, itaconic anhydride, citraconic anhydride, dichloromaleic anhydride, difluoromaleic anhydride, itaconic anhydride, crotonic anhydride, glycidyl acrylate, glycidyl methacrylate, allyl glycidyl ether and vinylsilanes, such as vinyltrimethoxysilane, vinyltriethoxysilane, vinyltriacetoxysilane and γ-methacryloxypropyltri¬methoxysilane.

2. Multilayer pipe according to Claim 1, further comprising a layer C₁ of a fluoropolymer.

3. Multilayer pipe according to Claim 1 or Claim 2, further comprising a barrier layer C₅.

4. Multilayer pipe according to one of Claims 1 to 3, further comprising a layer C₆ of a polyolefin.

5. Multilayer pipe according to Claim 1, comprising (in the following order, from the inside of the pipe outwards) a layer C₁, a layer C₂, a layer C₃ directly attached to the layer C₂, a layer C₄ directly attached to the layer C₃, a layer C₅ and a layer C₆.

6. Multilayer pipe according to any one of the preceding claims, in which the layers adhere to one another in their respective contact regions.

7. Multilayer pipe according to any one of the preceding claims, in which the fluoropolymer of the layer C₁ and/or of the layer C₂ is a polymer having, in its chain, at least one monomer chosen from compounds containing a vinyl group capable of opening, in order to be polymerized, and containing, directly attached to this vinyl group, at least one fluorine atom, one fluoroalkyl group or one fluoroalkoxy group.

8. Multilayer pipe according to any one of the preceding claims, in which the fluoropolymer of the layer C₁ and/or of the layer C₂ is a VDF homopolymer or a VDF copolymer containing at least 50% VDF by weight, or else an EFEP.

9. Multilayer pipe according to any one of the preceding claims, in which the fluoropolymer onto which the unsaturated monomer is grafted is a VDF homopolymer or a VDF copolymer containing at least 50% by weight of VDF, or else an EFEP.

10. Multilayer pipe according to any one of the preceding claims, in which the adhesion tie is a functionalized polyolefin optionally blended with a polyolefin.

11. Multilayer pipe according to Claim 10, in which the functionalized polyolefin possesses functional groups capable of reacting with the functional groups grafted onto the fluoropolymer when the layer C₃ is in direct contact with the layer C₂.

12. Multilayer pipe according to any one of the preceding claims, in which the polyolefin of the layer C₄ and/or of the layer C₆ is a polymer predominantly comprising ethylene and/or propylene units.

13. Multilayer pipe according to Claim 12, in which the polyolefin is a polyethylene homopolymer or copolymer or a polypropylene homopolymer or copolymer.

14. Multilayer pipe according to Claim 16, in which the polyolefin is an XPE.

15. Multilayer pipe comprising (in the following order, from the inside of the pipe outwards):
• a layer C₁ of a PVDF homopolymer or copolymer;
• a layer C₂ of a PVDF homopolymer or copolymer onto which maleic anhydride has been radiation-grafted;
• an adhesion tie layer C₃;
• a polyethylene layer C₄, preferably of the XPE type;
• a barrier layer C₅; and
• a polyethylene layer C₆, preferably of the XPE type.

16. Multilayer pipe according to Claim 15, in which an adhesion tie layer is placed between C₅ and C₄ and/or between C₅ and C₆.

17. Multilayer pipe according to either of Claims 15 or 16, in which the layers adhere to one another in their respective contact regions.

18. Multilayer pipe according to one of Claims 15 to 17, in which the adhesion tie is a functionalized polyolefin possessing functional groups capable of reacting with maleic anhydride, optionally mixed with a polyolefin.

19. Multilayer pipe according to Claim 18, in which the functionalized polyolefin possesses epoxide or hydroxy functional groups.

20. Multilayer pipe according to either of Claims 18 and 19, in which the functionalized polyolefin is a copolymer of ethylene, an unsaturated epoxide, for example glycidyl methacrylate, and optionally an alkyl acrylate.

21. Multilayer pipe according to either of Claims 2 and 6-11 in which said adhesion tie layer C₃ is a functionalized polyolefin, a copolymer of ethylene with an unsaturated epoxide, preferably glycidyl (meth)acrylate and optionally with a C₁-C₈ alkyl (meth)acrylate, and said polyolefin layer C₄ contains predominantly ethylene and/or propylene units.

22. Use of a pipe as defined in any one of Claims 1 to 21 for transporting water, especially hot water, chemicals or a gas.

23. Use of a pipe as defined in any one of Claims 1 to 21 for conveying hot water in an under-floor radiant heating system or for conveying hot water to a radiator.

24. Use of a pipe as defined in any one of Claims 1 to 21 in radiant heating systems.

25. Use according to Claim 22, **characterized in that** the gas is a gaseous hydrocarbon, nitrogen, helium, hydrogen, oxygen, a corrosive gas or a gas capable of degrading polyethylene or polypropylene, or a cryogen.

26. Process for manufacturing a multilayer pipe as defined in one of Claims 1 to 21, having at least one type-C XPE layer, in which:
• the various layers of the multilayer pipe are coextruded; and then
• the multilayer pipe thus formed is exposed to radiation in order to crosslink the polyethylene layer or layers.

27. Radiant heating system comprising at least one pipe according to any one of Claims 1 to 21.
